# EUROPEAN PATENT APPLICATION

(11) **EP 3 757 866 A1**
(43) Date of publication of application: **30.12.2020**
(21) Application number: 18907348.9
(22) Date of filing: 13.09.2018
(51) Int. Cl.: G06K 9/00

(54) **HARBOR AREA MONITORING METHOD AND SYSTEM, AND CENTRAL CONTROL SYSTEM**

(30) Priority: 24.02.2018 CN 201810157700
(71) Applicant: Beijing Tusen Weilai Technology Co., Ltd., Beijing 101300 (CN)
(72) Inventor: WU, Nan, Beijing 101300 (CN)
(74) Representative: Murgitroyd & Company
(86) International application number: PCT/CN2018/105474
(87) International publication number: WO 2019/161663

(57) **Abstract**

The present disclosure provides a port area monitoring method, a port area monitoring system and a central control system, capable of solving the problem in the related art that target objects in a port area cannot be observed globally in an intuitive and efficient manner. The port area monitoring method includes: receiving (101) images captured by respective roadside cameras in a port area; performing (102) coordinate conversion and stitching on the received images to obtain a global image of the port area in God's view; determining (103) a road area in the global image; performing (104) object detection and object tracking on the road area in the global image to obtain a tracking result and a category of a target object; and displaying (105) the tracking result and the category of the target object in the global image. The above solution can solve the problem in the related art that target objects in a port area cannot be observed globally in an intuitive and efficient manner.

## Description

The present disclosure claims priority to Chinese Patent Application No. 201810157700.X, titled "PORT AREA MONITORING METHOD AND SYSTEM AND CENTRAL CONTROL SYSTEM", filed on February 24, 2018, the content of which is incorporated herein by reference in its entirety.

### TECHNICAL FIELD

The present disclosure relates to autonomous driving technology, and more particularly, to a port area monitoring method, a port area monitoring system and a central control system.

### BACKGROUND

Currently, with the development of autonomous driving technology, there are a large number of autonomous driving vehicles in certain large geographic areas (such as coastal port areas, highway port areas, mining areas, large warehouses, cargo distribution centers, campuses, etc.). To ensure safe driving of autonomous vehicles in an area, it is desired to have a global observation of target objects (such as autonomous vehicles, non-autonomous vehicles, pedestrians, etc.) in the area. Although surveillance cameras are typically installed in these specific areas, they operate independently and have different view angles. Operators need to observe screen images from a number of surveillance cameras at the same time, which is inefficient. Moreover, it is difficult to learn the conditions of the target objects in the area intuitively from the captured images.

### SUMMARY

In view of the above problem, the present disclosure provides a port area monitoring method, a port area monitoring system and a central control system, capable of solving the problem in the related art that target objects in a port area cannot be observed globally in an intuitive and efficient manner.

In a first aspect, a port area monitoring method is provided according to an embodiment of the present disclosure. The method includes: receiving images captured by respective roadside cameras in a port area; performing coordinate conversion and stitching on the received images to obtain a global image of the port area in God's view; determining a road area in the global image; performing object detection and object tracking on the road area in the global image to obtain a tracking result and a category of a target object; and displaying the tracking result and the category of the target object in the global image.

In a second aspect, a port area monitoring system is provided according to an embodiment of the present disclosure. The system includes roadside cameras provided in a port area and a central control system. The roadside cameras are configured to capture images and transmit the images to the central control system. The central control system is configured to receive the images captured by the respective roadside cameras; perform coordinate conversion and stitching on the received images to obtain a global image of the port area in God's view; determine a road area in the global image; perform object detection and object tracking on the road area in the global image to obtain a tracking result and a category of a target object; and display the tracking result and the category of the target object in the global image.

In a third aspect, a central control system is provided according to an embodiment of the present disclosure. The central control system includes: a communication unit configured to receive images captured by respective roadside cameras; an image processing unit configured to perform coordinate conversion and stitching on the received images to obtain a global image of the port area in God's view; a road area determining unit configured to determine a road area in the global image; a target detection and tracking unit configured to perform object detection and object tracking on the road area in the global image to obtain a tracking result and a category of a target object; and a display unit configured to display the tracking result and the category of the target object in the global image.

With the technical solution of the present disclosure, a large number of roadside cameras can be provided in a port area for capturing images in the port area. First, the images captured by the roadside cameras in the port area can be coordinate converted and stitched to obtain a global image of the port area in God's view. Second, a road area in the global image can be determined. Finally, object detection and object tracking can be performed on the global image to obtain a tracking result and a category of a target object in the road area. With the technical solution of the present disclosure, on one hand, it is possible to obtain a real-time global image of the entire port area in God's view, which provides a bird's-eye view of the ground, so that the conditions within the entire port area can be viewed more intuitively. Operators only need to view one screen picture to fully understand all the conditions in the port area. On the other hand, the tracking results and categories of the target objects in the road area in the global image can be displayed in real time, so that the operators can intuitively understand the movements of various categories of target objects. Therefore, the technical solution of the present disclosure can solve the technical problem in the related art that target objects in a port area cannot be observed globally in an intuitive and efficient manner.

The other features and advantages of the present disclosure will be explained in the following description, and will become apparent partly from the description or be understood by implementing the present disclosure. The objects and other advantages of the present disclosure can be achieved and obtained from the structures specifically illustrated in the written description, claims and figures.

In the following, the solutions according to the present disclosure will be described in detail with reference to the figures and embodiments.

### BRIEF DESCRIPTION OF THE DRAWINGS

The figures are provided for facilitating further understanding of the present disclosure. The figures constitute a portion of the description and can be used in combination with the embodiments of the present disclosure to interpret, rather than limiting, the present disclosure. It is apparent to those skilled in the art that the figures described below only illustrate some embodiments of the present disclosure and other figures can be obtained from these figures without applying any inventive skills. In the figures:
Fig. 1 is a first schematic diagram showing a structure of a port area monitoring system according to an embodiment of the present disclosure;
Fig. 2 is a second schematic diagram showing a structure of a port area monitoring system according to an embodiment of the present disclosure;
Fig. 3 is a first schematic diagram showing a structure of a central control system according to an embodiment of the present disclosure;
Fig. 4A is a schematic diagram showing an image captured by a roadside camera according to an embodiment of the present disclosure;
Fig. 4B is a schematic diagram showing grouping of images based on capturing time according to an embodiment of the present disclosure;
Fig. 4C is a schematic diagram of a group of bird's-eye-view images according to an embodiment of the present disclosure;
Fig. 4D is a schematic diagram showing stitching of a group of bird's-eye-view images into a global image according to an embodiment of the present disclosure;
Fig. 4E is a schematic diagram showing tracking results and categories of target objects displayed in a global image according to an embodiment of the present disclosure;
Fig. 5 is a second schematic diagram showing a structure of a central control system according to an embodiment of the present disclosure;
Fig. 6 is a third schematic diagram showing a structure of a port area monitoring system according to an embodiment of the present disclosure;
Fig. 7 is a schematic diagram of communications among a first V2X device, a roadside V2X device, and a second V2X device according to an embodiment of the present disclosure;
Fig. 8 is a third schematic diagram showing a structure of a central control system according to an embodiment of the present disclosure;
Fig. 9 is a first flowchart illustrating a port area monitoring method according to an embodiment of the present disclosure;
Fig. 10 is a flowchart illustrating a process for coordinate converting and stitching received images to obtain a global image of a port area in God's view according to an embodiment of the present disclosure; and
Fig. 11 is a second flowchart illustrating a port area monitoring method according to an embodiment of the present disclosure.

### DETAILED DESCRIPTION OF THE EMBODIMENTS

In the following, the solutions according to the embodiments of the present disclosure will be described clearly and completely with reference to the figures, such that the solutions can be better understood by those skilled in the art. Obviously, the embodiments described below are only some, rather than all, of the embodiments of the present disclosure. All other embodiments that can be obtained by those skilled in the art based on the embodiments described in the present disclosure without any inventive efforts are to be encompassed by the scope of the present disclosure.

The application scenarios of the technical solutions of the present disclosure are not limited to port areas (including coastal port areas, highway port areas, etc.). Rather, the technical solutions of the present disclosure can be applied to other application scenarios such as mining areas, cargo distribution centers, large warehouses, campuses, etc. The technical solutions can be applied to other application scenarios, without substantially changes or any inventive efforts by those skilled in the art to overcome some specific technical problems. For simplicity, detailed description regarding application of the technical solutions of the present disclosure to other application scenarios will be omitted. The following descriptions of technical solutions will be given taking a port area as an example.

### Embodiment 1

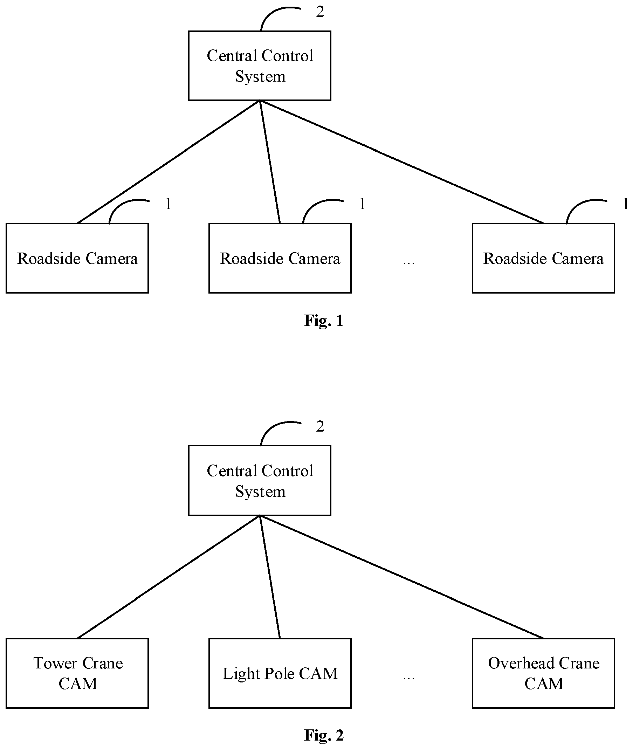

Referring to Fig. 1, which is a schematic diagram showing a structure of a port area monitoring system according to an embodiment of the present disclosure, the system includes roadside cameras 1 provided in a port area and a central control system 2.

The roadside cameras 1 are configured to capture images and transmit the images to the central control system 2.

The central control system 2 is configured to receive the images captured by the respective roadside cameras 1; perform coordinate conversion and stitching on the received images to obtain a global image of the port area in God's view; determine a road area in the global image; perform object detection and object tracking on the road area in the global image to obtain a tracking result and a category of a target object; and display the tracking result and the category of the target object in the global image.

In the embodiment of the present disclosure, the roadside cameras 1 can adopt a principle of full coverage of the port area, so that the group of images captured by the roadside cameras 1 can cover the entire geographical area of the port area. Of course, this can be set flexibly by those skilled in the art depending on actual requirements, e.g., to cover only some core regions in the port area. The present disclosure is not limited to this.

In some embodiments, in order to make the images captured by the roadside cameras 1 cover a larger field of view, the roadside cameras 1 can be provided on existing apparatuses with a certain height in the port area, such as tower cranes, tire cranes, bridge cranes, light poles, overhead cranes, reach stackers, mobile cranes, etc., or on roadside apparatuses with a certain height that are dedicated to installing the roadside cameras 1 in the port area. As shown in Fig. 2, the roadside camera 1 provided on a tower crane can be referred to as a tower crane CAM, the roadside camera 1 provided on a light pole can be referred to as a light pole CAM, and the roadside camera 1 provided on an overhead crane can be referred to as an overhead crane CAM

In some embodiments, in order to better stitch the images captured by the respective roadside cameras 1, the image capturing of all roadside cameras 1 can be clock-synchronized, and the camera parameters of the respective roadside cameras 1 can be the same, such that the captured images can have the same size.

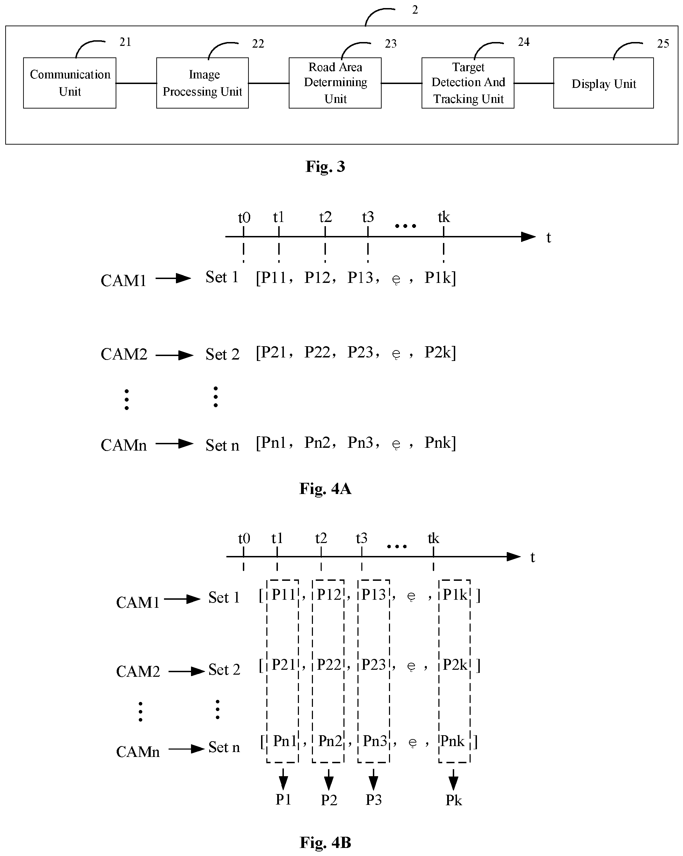

In some embodiments, the central control system 2 can have a structure as shown in Fig. 3, including a communication unit 21, an image processing unit 22, a road area determination unit 23, a target detection and tracking unit 24, and a display unit 25.

The communication unit 21 is configured to receive the images captured by the respective roadside cameras.

The image processing unit 22 is configured to perform the coordinate conversion and stitching on the received images to obtain the global image of the port area in God's view.

The road area determining unit 23 is configured to determine the road area in the global image.

The target detection and tracking unit 24 is configured to perform the object detection and object tracking on the road area in the global image to obtain the tracking result and the category of the target object.

The display unit 25 is configured to the tracking result and the category of the target object in the global image.

In some embodiments of the present disclosure, the central control system 2 can run on a device such as a Digital Signal Processor (DSP), a Field Programmable Gate Array (FPGA) controller, a desktop computer, a mobile computer, a PAD, or a single chip microcomputer.

In some embodiments of the present disclosure, the communication unit 21 can transmit and receive information wirelessly, e.g., via an antenna. The image processing unit 22, the road area determination unit 23, and the target detection and tracking unit 24 can run on a processor (for example, a Central Processing Unit (CPU))of a device such as a DSP, an FPGA controller, a desktop computer, a mobile computer, a PAD, or a single chip microcomputer. The display unit 25 can run on a display (for example, a Graphics Processing Unit (GPU)) of a device such as a DSP, an FPGA controller, a desktop computer, a mobile computer, a PAD, or a single chip microcomputer.

In some embodiments of the present disclosure, the image processing unit 22 can be configured to: determine images with same capturing time among the received images as a group of images; perform coordinate conversion on each image in the group of images to obtain a group of bird's-eye-view images; and stitch the group of bird's-eye-view images in a predetermined stitching order to obtain the global image. The stitching order can be derived from a spatial position relationship among the respective roadside cameras.

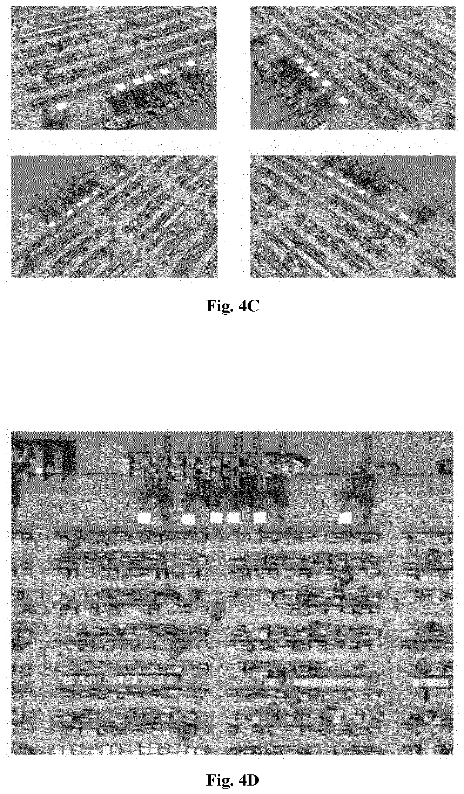

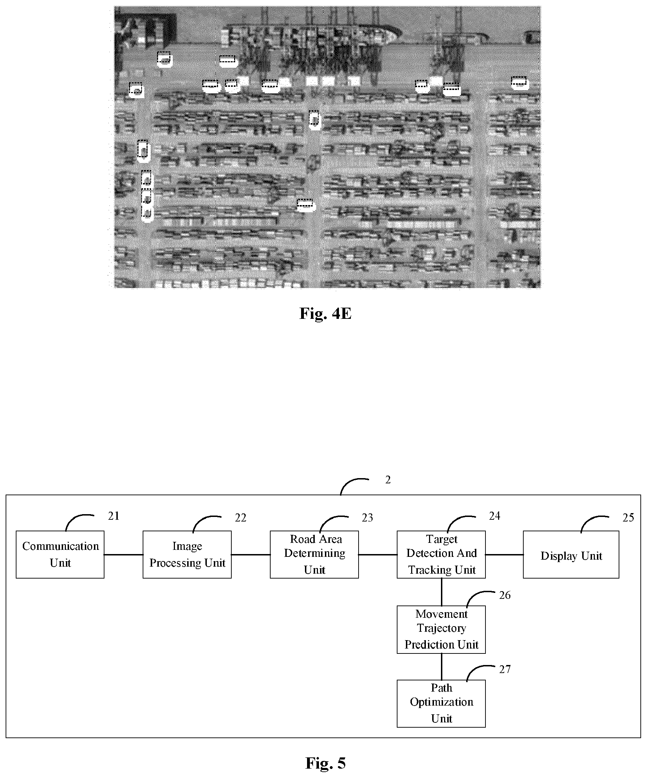

For instance, assuming there are n roadside cameras 1 in the port area and the n roadside cameras 1 are sequentially numbered CAM1, CAM2, CAM3, ..., CAMn according to the neighboring relationship of their spatial positions, the image stitching order can be set based on the spatial position relationship among the n roadside cameras 1 as: CAM1->CAM2->CAM3->, ..., ->CAMn Taking time t0 as the starting time, the images captured sequentially by CAM1 constitute Image Set 1, the images captured sequentially by CAM2 constitute Image Set 2, ..., the images captured sequentially by CAMn constitute Image Set. As shown in Fig. 4A, and each image set contains k images. The images in n image sets with the same capturing time are determined as a group of images. As shown in Fig. 4B, the images in a dashed frame constitute a group of images, and k groups of images are obtained. A global image is generated from a group of images to obtain k global images. Each image in each group is coordinate converted to obtain a group of bird's-eye view images. As shown in Fig. 4C, four roadside cameras in the port area capture four bird's-eye view images at the same time, respectively. The four bird's-eye view images form a group of bird's-eye view images. Fig. 4D shows a global image obtained by stitching the group of bird's-eye view images in a predetermined stitching order. Fig. 4E shows the tracking results and categories of the target objects in a global image, where tracking results of vehicles are shown in dashed frames.

In an example, an image can be projected onto the ground plane to obtain a bird's-eye view image corresponding to the image. The specific implementation can be as follows:
First, a unified ground plane coordinate system is established in advance.
Second, for each roadside camera, a conversion relationship between an imaging plane coordinate system of the roadside camera and the ground plane coordinate system is obtained by means of pre-identification. For example, a conversion relationship between a camera coordinate system of the roadside camera and the ground plane coordinate system can be established by manual or computerized pre-identification. According to the conversion relationship between the camera coordinate system of the roadside camera and the ground plane coordinate system (as in the prior art), the conversion relationship between the camera coordinate system of the roadside camera and the imaging plane coordinate system of the roadside camera, the conversion relationship between the imaging plane coordinate system of the roadside camera and the ground plane coordinate system can be obtained.
Finally, for an image captured by the roadside camera, according to the conversion relationship between the imaging plane coordinate system of the roadside camera and the ground plane coordinate system, each pixel point in the image captured by the roadside camera is projected into the ground plane coordinate system, and a bird's-eye view image corresponding to the image can be obtained.

In some embodiments of the present disclosure, the road area determining unit 23 can be, but not limited to be, implemented in any of the following schemes.

Scheme A1: A high-precision map corresponding to the port area can be superimposed on the global image to obtain the road area in the global image.

Scheme A2: Semantic segmentation can be performed on the global image using a predetermined semantic segmentation algorithm to obtain the road area in the global image.

In Scheme A1, the high-precision map corresponding to the port area refers to an electronic map drawn by a map engine based on high-precision map data of the port area, including all roads in the port area (including road boundary lines, lane lines, road directions, speed limits, steering and other information). In an embodiment of the present disclosure, the high-precision map corresponding to the port area and the global image are superimposed to obtain road areas in the global image, which can be implemented in the following ways. At Step 1), the size of the global image can be adjusted to be consistent with the high-precision map (e.g., by stretching/scaling). At Step 2), several common datum points that can be used for superimposition can be calibrated manually on the high-precision map and the global image (such as the four corner points of the high-precision map, or junction points of certain roads, etc.), and the high-precision map and the global image can be superimposed based on the datum points. At Step 3), roads can be drawn manually at corresponding positions in the global image based on the roads on the high-precision map to obtain the road areas in the global image. Alternatively, with the image coordinate system of the global image as the reference, and the road points constituting the roads on the high-precision map can be projected into the image coordinate system to obtain the coordinate points of the respective road points in the image coordinate system. The pixel points in the global image that coincide with the aforementioned coordinate points are marked as road points, so as to obtain the road areas in the global image.

In Scheme A2, the predetermined semantic segmentation algorithm may be a pre-trained semantic segmentation model that can perform semantic segmentation on an input image. The semantic segmentation model can be obtained by iteratively training a neural network model based on the sample data collected in advance. The sample data includes: a certain number of images containing roads as captured in the port area in advance, and a result of manual semantic annotation of the captured images. Regarding how to iteratively train the neural network model to obtain the semantic segmentation model based on the sample data, reference can be made to the related art and the present disclosure is not limited to this.

In some embodiments of the present disclosure, the target detection and tracking unit 24 can be implemented as follows. A predetermined object detection algorithm is used to detect objects in the road area in the global image to obtain a detection result (the detection result includes a two-dimensional frame and a category of each target object, where the two-dimensional frame of the target object can be set to different colors to represent the category of the target object, e.g., a green frame may indicate that the target object in the frame is a vehicle, while a red frame may indicate that the target object in the frame is a pedestrian, etc., the category of the target object can be marked near the two-dimensional frame of the target object, e.g., the category of the target object in the two-dimensional frame can be marked with text right above or below the two-dimensional frame). A predetermined object tracking algorithm is used to obtain the object tracking results and categories for the global image based on the detection result of the global image and an object tracking result of the previous frame of the global image. In an embodiment of the present disclosure, the categories of the target objects may include vehicles, pedestrians, and the like. The object detection algorithm can be an object detection module obtained by iteratively training a neural network model in advance based on training data (including a certain number of images containing the target objects as captured in advance in the port area and a calibration result obtained by performing object detection and calibration on the image). The object tracking algorithm can be an object tracking model obtained by iteratively training a neural network model in advance based on the training data.

In order to further plan the driving paths of all autonomous vehicles in the port area globally and reasonably, in some embodiments of the present disclosure, the central control system 2 may further include a movement trajectory prediction unit 26 and a path optimization unit 27, as shown in Fig. 5.

The movement trajectory prediction unit 26 is configured to predict a movement trajectory corresponding to each target object based on the tracking result and category of the target object.

The path optimization unit 27 is configured to optimize a driving path for the autonomous vehicle based on the movement trajectory corresponding to each target object.

The communication unit 21 is further configured to transmit the optimized driving path for the autonomous vehicle to the autonomous vehicle.

In an example, the movement trajectory prediction unit 26 can predict the movement trajectory corresponding to each target object by: determining posture data of the target object based on the tracking result and category analysis for the target object; and inputting the posture data of the target object into a predetermined movement model corresponding to the category of the target object, to obtain the movement trajectory corresponding to the target object.

Of course, those skilled in the art can also use other alternative technical solutions to predict the movement trajectory of the target object. For example, a positioning unit (such as a GPS positioning unit) and an Inertial Measurement Unit (IMU), or other devices that can achieve positioning and posture measurement, can be provided in the target object. When the target object is moving, the posture data of the target object is generated based on a measurement result from the positioning unit and a measurement result from the IMU, and the posture data is transmitted to the movement trajectory prediction unit 26. The movement trajectory prediction unit 26 can predict the movement trajectory corresponding to each target object by: receiving the posture data transmitted from the target object, and inputting the posture data of the target object into a predetermined movement model corresponding to the category of the target object, to obtain the movement trajectory corresponding to the target object.

In some embodiments of the present disclosure, the autonomous driving control device can synchronize an estimated driving trajectory of the autonomous vehicle in which it is located periodically or in real time (the autonomous driving control device can estimate the driving trajectory of the autonomous vehicle based on a historical driving trajectory of the autonomous vehicle and posture information fed back from an IMU sensor on the autonomous vehicle regarding how to estimate the driving trajectory, reference can be made to the related art and this technical point is not the essence of the technical solution of the present disclosure) with the central control system 2. The path optimization unit 27 can be configured to: compare, for each autonomous vehicle, an estimated driving trajectory corresponding to the autonomous vehicle transmitted from the autonomous vehicle with the movement trajectory corresponding to each target object, and optimize the driving path for the autonomous vehicle when the estimated driving trajectory overlaps (fully or partially) the movement trajectory corresponding to at least one target object, such that the optimized driving path does not overlap the movement trajectory corresponding to any target object. The driving path for the autonomous vehicle is not optimized when the estimated driving trajectory does not overlap the movement trajectory corresponding to any target object.

In some embodiments of the present disclosure, the estimated driving trajectory corresponding to the autonomous vehicle is composed of a certain number of position points, and the movement trajectory corresponding to each target object is composed of a certain number of position points. If the estimated driving trajectory corresponding to the autonomous vehicle overlaps the movement trajectory of a target object at n (where n is a predetermined natural number greater than or equal to 1, the value of n can be flexibly set depending on actual requirements and the present disclosure is not limited to this) or more position points, it is determined that the estimated driving trajectory of the autonomous vehicle overlaps the movement trajectory of the target object.

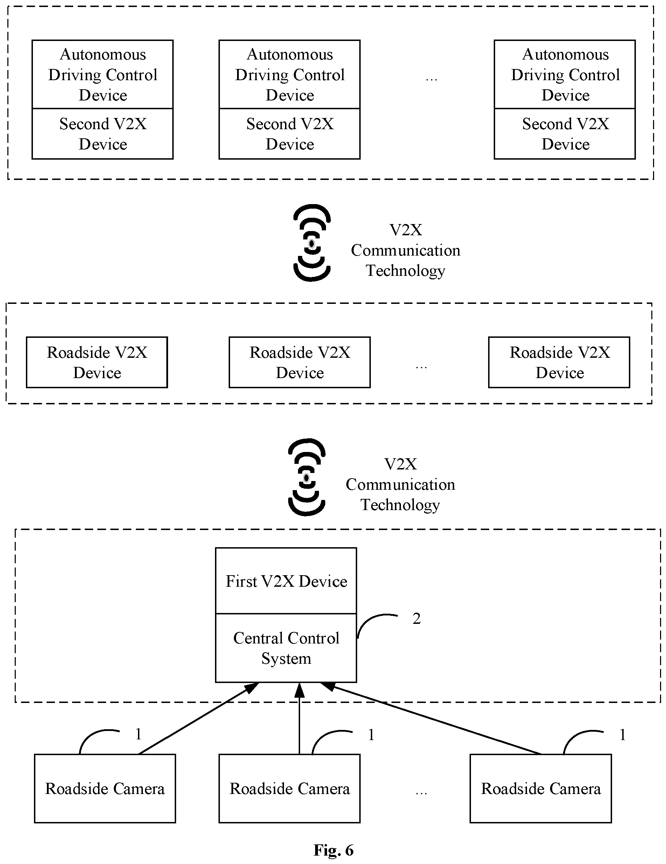

In some embodiments of the present disclosure, in order to improve the communication success rate and quality, the system as shown in Fig. 5 can also include a roadside Vehicle-to-Everything (V2X) device provided in the port area and an autonomous driving control device provided on the autonomous vehicle. The central control system 2 can be provided with a first V2X device and the autonomous driving control device can be provided with a second V2X device, as shown in Fig. 6.

The communication unit 21 can be configured to transmit the optimized driving path for the autonomous vehicle to the first V2X device, and the first V2X device can be configured to transmit the optimized driving path for the autonomous vehicle to the roadside V2X device.

The roadside V2X device can be configured to broadcast the optimized driving path for the autonomous vehicle as received from the first V2X device, and the second V2X device on the autonomous vehicle can be configured to receive the optimized driving path for the autonomous vehicle.

In some embodiments of the present disclosure, the roadside V2X device can adopt a principle of full coverage of the port area. That is, the roadside V2X device can achieve the communication among the autonomous vehicles in all areas of the port area and the central control system. The first V2X device of the central control system encapsulates the optimized driving path corresponding to the autonomous vehicle into a V2X communication message, and broadcasts it. When the roadside V2X device receives the V2X communication message, it broadcasts the V2X communication message. The second V2X device receives the V2X communication message corresponding to the autonomous vehicle in which it is located.

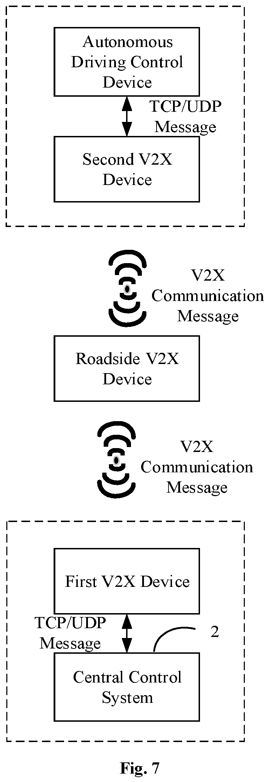

The communication unit 21 encapsulates the optimized driving path for the autonomous vehicle into a Transmission Control Protocol (TCP) / User Datagram Protocol (UDP) message and transmits it to the first V2X device (for example, the driving path can be included as a payload of the TCP/UDP message). The first V2X device parses the received TCP/UDP message to obtain the optimized driving path, encapsulates the obtained driving path into a V2X communication message and broadcasts the V2X communication message. When the roadside V2X device receives the V2X communication message, it broadcasts the V2X communication message. The second V2X device receives the V2X communication message for its corresponding autonomous vehicle, parses the received V2X communication message to obtain the optimized driving path corresponding to the autonomous vehicle corresponding to the second V2X device, encapsulates the driving path into a TCP/UDP message and transmits it to the autonomous driving control device corresponding to the autonomous vehicle, as shown in Fig. 7. Both the TCP/UDP message and the V2X communication message carry identity information corresponding to the autonomous vehicle to declare the autonomous vehicle corresponding to the optimized driving path in the TCP/UDP message and the V2X message. The communication interface between the first V2X device and the communication unit 21 of the central control system 2 can use an Ethernet, a Universal Serial Bus (USB), or a serial port. The communication interface between the second V2X device and the autonomous driving control device can use an Ethernet, a USB or a serial port.

### Embodiment 2

Based on the same inventive concept as the above Embodiment 1, Embodiment 2 of the present disclosure provides a central control system having a structure shown in Fig. 3 or 5. The description of the central control system will be omitted here.

### Embodiment 3

Based on the same inventive concept as the above Embodiment 1, Embodiment 3 of the present disclosure provides a central control system.

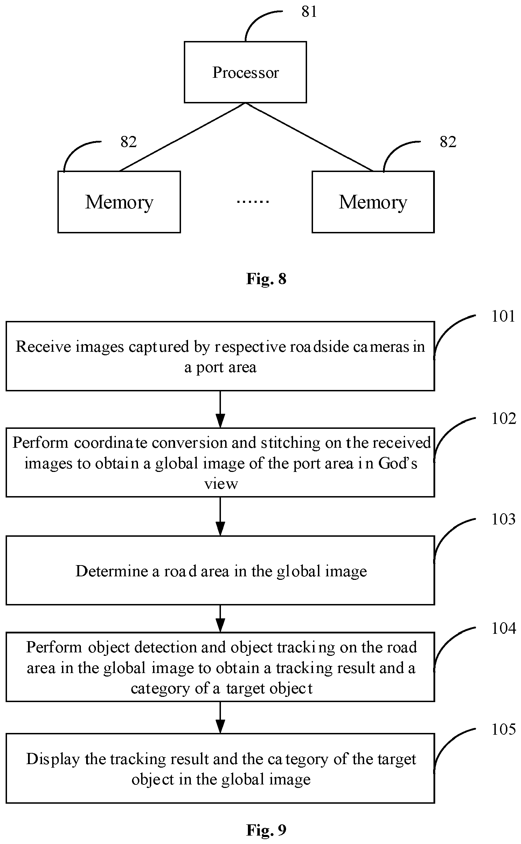

Fig. 8 shows a structure of the central control system according to an embodiment of the present disclosure, including a processor 81 and at least one memory 82. The at least one memory 82 contains at least one machine executable instruction, and the processor 81 is operative to execute the at least one machine executable instruction to: receive images captured by respective roadside cameras; perform coordinate conversion and stitching on the received images to obtain a global image of the port area in God's view; determine a road area in the global image; perform object detection and object tracking on the road area in the global image to obtain a tracking result and a category of a target object; and display the tracking result and the category of the target object in the global image.

In some embodiments, the processor 81 being operative to execute the at least one machine executable instruction to perform the coordinate conversion and stitching on the received images to obtain the global image of the port area in God's view may include the processor 81 being operative to execute the at least one machine executable instruction to: determine images with same capturing time among the received images as a group of images; perform coordinate conversion on each image in the group of images to obtain a group of bird's-eye-view images; stitch the group of bird's-eye-view images in a predetermined stitching order to obtain the global image. The stitching order is derived from a spatial position relationship among the respective roadside cameras.

In some embodiments, the processor 81 being operative to execute the at least one machine executable instruction to determine the road area in the global image may include the processor being operative to execute the at least one machine executable instruction to: superimpose a high-precision map corresponding to the port area on the global image to obtain the road area in the global image; or perform semantic segmentation on the global image using a predetermined semantic segmentation algorithm to obtain the road area in the global image.

In some embodiments, the processor 81 may be further operative to execute the at least one machine executable instruction to: predict a movement trajectory corresponding to each target object based on the tracking result and category of the target object; optimize a driving path for the autonomous vehicle based on the movement trajectory corresponding to each target object; transmit the optimized driving path for the autonomous vehicle to the autonomous vehicle.

In some embodiments, the processor 81 being operative to execute the at least one machine executable instruction to optimize the driving path for the autonomous vehicle based on the movement trajectory corresponding to the target object may include the processor 81 being operative to execute the at least one machine executable instruction to: compare, for each autonomous vehicle, an estimated driving trajectory corresponding to the autonomous vehicle transmitted from the autonomous vehicle with the movement trajectory corresponding to each target object, and optimize the driving path for the autonomous vehicle when the estimated driving trajectory overlaps the movement trajectory corresponding to at least one target object, such that the optimized driving path does not overlap the movement trajectory corresponding to any target object. The driving path for the autonomous vehicle is not optimized when the estimated driving trajectory does not overlap the movement trajectory corresponding to any target object.

### Embodiment 4

Based on the same inventive concept as the above Embodiment 1, Embodiment 4 of the present disclosure provides a port area monitoring method. The process of the method is shown in Fig. 9. The port area monitoring method can be performed in the above central control system 2. The method includes the following steps.

At step 101, images captured by respective roadside cameras in a port area are received.

At step 102, coordinate conversion and stitching are performed on the received images to obtain a global image of the port area in God's view.

At step 103, a road area in the global image is determined.

At step 104, object detection and object tracking are performed on the road area in the global image to obtain a tracking result and a category of a target object.

At step 105, the tracking result and the category of the target object are displayed in the global image.

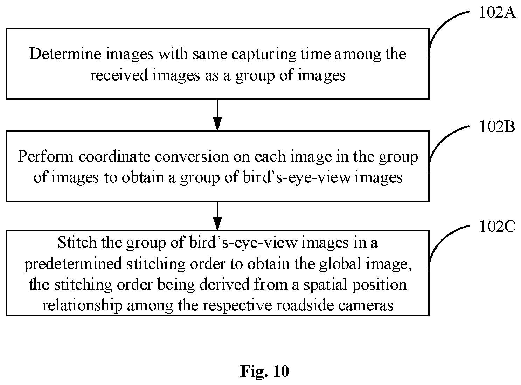

In some embodiments of the present disclosure, the above step 102 may be implemented according to the process shown in Fig. 10.

At step 102A, images with same capturing time among the received images are determined as a group of images.

At step 102B, coordinate conversion is performed on each image in the group of images to obtain a group of bird's-eye-view images.

At step 102C, the group of bird's-eye-view images is stitched in a predetermined stitching order to obtain the global image. The stitching order is derived from a spatial position relationship among the respective roadside cameras.

In some embodiments of the present disclosure, the step 103 may be implemented by: superimposing a high-precision map corresponding to the port area on the global image to obtain the road area in the global image (referring to Scheme A1 in Embodiment 1 and details thereof will be omitted here); or performing semantic segmentation on the global image using a predetermined semantic segmentation algorithm to obtain the road area in the global image (referring to Scheme A2 in Embodiment 1 and details thereof will be omitted here).

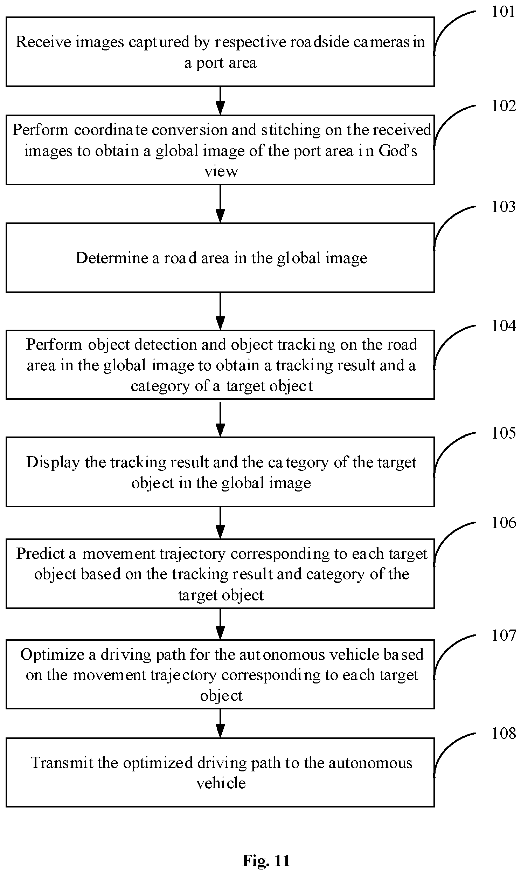

The above methods shown in Figs. 9 and 10 may further include step 106 to step 108. As shown in Fig. 11, the method process shown in Fig. 9 may further include step 106 to step 108.

At step 106, a movement trajectory corresponding to each target object is predicted based on the tracking result and category of the target object.

At step 107, a driving path for the autonomous vehicle is optimized based on the movement trajectory corresponding to each target object.

At step 108, the optimized driving path is transmitted to the autonomous vehicle.

In some embodiments, the step 107 may be implemented by: comparing, for each autonomous vehicle, an estimated driving trajectory corresponding to the autonomous vehicle transmitted from the autonomous vehicle with the movement trajectory corresponding to each target object, and optimizing the driving path for the autonomous vehicle when the estimated driving trajectory overlaps the movement trajectory corresponding to at least one target object, such that the optimized driving path does not overlap the movement trajectory corresponding to any target object. The driving path for the autonomous vehicle is not optimized when the estimated driving trajectory does not overlap the movement trajectory corresponding to any target object.

In some embodiments, the step 108 may be implemented by transmitting the optimized driving path to the autonomous vehicle using Vehicle-to-Everything (V2X) communication technology.

The basic principles of the present disclosure have been described above with reference to the embodiments. However, it can be appreciated by those skilled in the art that all or any of the steps or components of the method or apparatus according to the present disclosure can be implemented in hardware, firmware, software or any combination thereof in any computing device (including a processor, a storage medium, etc.) or a network of computing devices. This can be achieved by those skilled in the art using their basic programing skills based on the description of the present disclosure.

It can be appreciated by those skilled in the art that all or part of the steps in the method according to the above embodiment can be implemented in hardware following instructions of a program. The program can be stored in a computer readable storage medium. The program, when executed, may include one or any combination of the steps in the method according to the above embodiment.

Further, the functional units in the embodiments of the present disclosure can be integrated into one processing module or can be physically separate, or two or more units can be integrated into one module. Such integrated module can be implemented in hardware or software functional units. When implemented in software functional units and sold or used as a standalone product, the integrated module can be stored in a computer readable storage medium.

It can be appreciated by those skilled in the art that the embodiments of the present disclosure can be implemented as a method, a system or a computer program product. The present disclosure may include pure hardware embodiments, pure software embodiments and any combination thereof. Also, the present disclosure may include a computer program product implemented on one or more computer readable storage mediums (including, but not limited to, magnetic disk storage and optical storage) containing computer readable program codes.

The present disclosure has been described with reference to the flowcharts and/or block diagrams of the method, device (system) and computer program product according to the embodiments of the present disclosure. It can be appreciated that each process and/or block in the flowcharts and/or block diagrams, or any combination thereof, can be implemented by computer program instructions. Such computer program instructions can be provided to a general computer, a dedicated computer, an embedded processor or a processor of any other programmable data processing device to constitute a machine, such that the instructions executed by a processor of a computer or any other programmable data processing device can constitute means for implementing the functions specified by one or more processes in the flowcharts and/or one or more blocks in the block diagrams.

These computer program instructions can also be stored in a computer readable memory that can direct a computer or any other programmable data processing device to operate in a particular way. Thus, the instructions stored in the computer readable memory constitute a manufacture including instruction means for implementing the functions specified by one or more processes in the flowcharts and/or one or more blocks in the block diagrams.

These computer program instructions can also be loaded onto a computer or any other programmable data processing device, such that the computer or the programmable data processing device can perform a series of operations/steps to achieve a computer-implemented process. In this way, the instructions executed on the computer or the programmable data processing device can provide steps for implementing the functions specified by one or more processes in the flowcharts and/or one or more blocks in the block diagrams.

While the embodiments of the present disclosure have described above, further alternatives and modifications can be made to these embodiments by those skilled in the art in light of the basic inventive concept of the present disclosure. The claims as attached are intended to cover the above embodiments and all these alternatives and modifications that fall within the scope of the present disclosure.

Obviously, various modifications and variants can be made to the present disclosure by those skilled in the art without departing from the spirit and scope of the present disclosure. Therefore, these modifications and variants are to be encompassed by the present disclosure if they fall within the scope of the present disclosure as defined by the claims and their equivalents.

## Claims

1. A port area monitoring method, comprising:
receiving images captured by respective roadside cameras in a port area;
performing coordinate conversion and stitching on the received images to obtain a global image of the port area in God's view;
determining a road area in the global image;
performing object detection and object tracking on the road area in the global image to obtain a tracking result and a category of a target object; and
displaying the tracking result and the category of the target object in the global image.

2. The method of claim 1, wherein said performing the coordinate conversion and stitching on the received images to obtain the global image of the port area in God's view comprises:
determining images with same capturing time among the received images as a group of images;
performing coordinate conversion on each image in the group of images to obtain a group of bird's-eye-view images;
stitching the group of bird's-eye-view images in a predetermined stitching order to obtain the global image, the stitching order being derived from a spatial position relationship among the respective roadside cameras.

3. The method of claim 1, wherein said determining the road area in the global image comprises:
superimposing a high-precision map corresponding to the port area on the global image to obtain the road area in the global image; or
performing semantic segmentation on the global image using a predetermined semantic segmentation algorithm to obtain the road area in the global image.

4. The method of claim 1, further comprising:
predicting a movement trajectory corresponding to each target object based on the tracking result and category of the target object;
optimizing a driving path for the autonomous vehicle based on the movement trajectory corresponding to each target object;
transmitting the optimized driving path to the autonomous vehicle.

5. The method of claim 4, wherein said optimizing the driving path for the autonomous vehicle based on the movement trajectory corresponding to the target object comprises:
comparing, for each autonomous vehicle, an estimated driving trajectory corresponding to the autonomous vehicle transmitted from the autonomous vehicle with the movement trajectory corresponding to each target object, and optimizing the driving path for the autonomous vehicle when the estimated driving trajectory overlaps the movement trajectory corresponding to at least one target object, such that the optimized driving path does not overlap the movement trajectory corresponding to any target object, wherein the driving path for the autonomous vehicle is not optimized when the estimated driving trajectory does not overlap the movement trajectory corresponding to any target object.

6. The method of claim 4, wherein said transmitting the optimized driving path to the autonomous vehicle comprises:
transmitting the optimized driving path to the autonomous vehicle using Vehicle-to-Everything (V2X) communication technology.

7. A port area monitoring system, comprising roadside cameras provided in a port area and a central control system, wherein:
the roadside cameras are configured to capture images and transmit the images to the central control system, and
the central control system is configured to receive the images captured by the respective roadside cameras; perform coordinate conversion and stitching on the received images to obtain a global image of the port area in God's view; determine a road area in the global image; perform object detection and object tracking on the road area in the global image to obtain a tracking result and a category of a target object; and display the tracking result and the category of the target object in the global image.

8. The system of claim 7, wherein the central control system comprises:
a communication unit configured to receive the images captured by the respective roadside cameras;
an image processing unit configured to perform the coordinate conversion and stitching on the received images to obtain the global image of the port area in God's view;
a road area determining unit, configured to determine the road area in the global image;
a target detection and tracking unit configured to perform the object detection and object tracking on the road area in the global image to obtain the tracking result and the category of the target object; and
a display unit configured to the tracking result and the category of the target object in the global image.

9. The system of claim 8, wherein the image processing unit is configured to:
determine images with same capturing time among the received images as a group of images;
perform coordinate conversion on each image in the group of images to obtain a group of bird's-eye-view images; and
stitch the group of bird's-eye-view images in a predetermined stitching order to obtain the global image, the stitching order being derived from a spatial position relationship among the respective roadside cameras.

10. The system of claim 8, wherein the road area determining unit is configured to:
superimpose a high-precision map corresponding to the port area on the global image to obtain the road area in the global image; or
perform semantic segmentation on the global image using a predetermined semantic segmentation algorithm to obtain the road area in the global image.

11. The system of claim 8, wherein the central control system further comprises a movement trajectory prediction unit and a path optimization unit, wherein:
the movement trajectory prediction unit is configured to predict a movement trajectory corresponding to each target object based on the tracking result and category of the target object,
the path optimization unit is configured to optimize a driving path for the autonomous vehicle based on the movement trajectory corresponding to each target object, and
the communication unit is further configured to transmit the optimized driving path for the autonomous vehicle to the autonomous vehicle.

12. The system of claim 11, wherein the path optimization unit is configured to:
compare, for each autonomous vehicle, an estimated driving trajectory corresponding to the autonomous vehicle transmitted from the autonomous vehicle with the movement trajectory corresponding to each target object, and optimize the driving path for the autonomous vehicle when the estimated driving trajectory overlaps the movement trajectory corresponding to at least one target object, such that the optimized driving path does not overlap the movement trajectory corresponding to any target object, wherein the driving path for the autonomous vehicle is not optimized when the estimated driving trajectory does not overlap the movement trajectory corresponding to any target object.

13. The system of claim 11, further comprising a roadside Vehicle-to-Everything (V2X) device provided in the port area and an autonomous driving control device provided on the autonomous vehicle, wherein the central control system is provided with a first V2X device and the autonomous driving control device is provided with a second V2X device, wherein
the communication unit is configured to transmit the optimized driving path for the autonomous vehicle to the first V2X device, and the first V2X device is configured to transmit the optimized driving path for the autonomous vehicle to the roadside V2X device, and
the roadside V2X device is configured to broadcast the optimized driving path for the autonomous vehicle as received from the first V2X device, and the second V2X device on the autonomous vehicle is configured to receive the optimized driving path for the autonomous vehicle.

14. A central control system, comprising:
a communication unit configured to receive images captured by respective roadside cameras;
an image processing unit configured to perform coordinate conversion and stitching on the received images to obtain a global image of the port area in God's view;
a road area determining unit configured to determine a road area in the global image;
a target detection and tracking unit configured to perform object detection and object tracking on the road area in the global image to obtain a tracking result and a category of a target object; and
a display unit configured to display the tracking result and the category of the target object in the global image.

15. The central control system of claim 14, wherein the image processing unit is configured to:
determine images with same capturing time among the received images as a group of images;
perform coordinate conversion on each image in the group of images to obtain a group of bird's-eye-view images; and
stitch the group of bird's-eye-view images in a predetermined stitching order to obtain the global image, the stitching order being derived from a spatial position relationship among the respective roadside cameras.

16. The central control system of claim 14, wherein the road area determination unit is configured to:
superimpose a high-precision map corresponding to the port area on the global image to obtain the road area in the global image; or
perform semantic segmentation on the global image using a predetermined semantic segmentation algorithm to obtain the road area in the global image.

17. The central control system of claim 14, further comprising a movement trajectory prediction unit and a path optimization unit, wherein:
the movement trajectory prediction unit is configured to predict a movement trajectory corresponding to each target object based on the tracking result and category of the target object,
the path optimization unit is configured to optimize a driving path for the autonomous vehicle based on the movement trajectory corresponding to each target object, and
the communication unit is further configured to transmitting the optimized driving path for the autonomous vehicle to the autonomous vehicle.

18. The central control system of claim 17, wherein the path optimization unit is configured to:
compare, for each autonomous vehicle, an estimated driving trajectory corresponding to the autonomous vehicle transmitted from the autonomous vehicle with the movement trajectory corresponding to each target object, and optimize the driving path for the autonomous vehicle when the estimated driving trajectory overlaps the movement trajectory corresponding to at least one target object, such that the optimized driving path does not overlap the movement trajectory corresponding to any target object, wherein the driving path for the autonomous vehicle is not optimized when the estimated driving trajectory does not overlap the movement trajectory corresponding to any target object.

19. A central control system, comprising a processor and at least one memory containing at least one machine executable instruction, the processor being operative to execute the at least one machine executable instruction to:
receive images captured by respective roadside cameras;
perform coordinate conversion and stitching on the received images to obtain a global image of the port area in God's view;
determine a road area in the global image;
perform object detection and object tracking on the road area in the global image to obtain a tracking result and a category of a target object; and
display the tracking result and the category of the target object in the global image.

20. The central control system of claim 19, wherein the processor being operative to execute the at least one machine executable instruction to perform the coordinate conversion and stitching on the received images to obtain the global image of the port area in God's view comprises the processor being operative to execute the at least one machine executable instruction to:
determine images with same capturing time among the received images as a group of images;
perform coordinate conversion on each image in the group of images to obtain a group of bird's-eye-view images;
stitch the group of bird's-eye-view images in a predetermined stitching order to obtain the global image, the stitching order being derived from a spatial position relationship among the respective roadside cameras.

21. The central control system of claim 19, wherein the processor being operative to execute the at least one machine executable instruction to determine the road area in the global image comprises the processor being operative to execute the at least one machine executable instruction to:
superimpose a high-precision map corresponding to the port area on the global image to obtain the road area in the global image; or
perform semantic segmentation on the global image using a predetermined semantic segmentation algorithm to obtain the road area in the global image.

22. The system of claim 19, wherein the processor is further operative to execute the at least one machine executable instruction to:
predict a movement trajectory corresponding to each target object based on the tracking result and category of the target object;
optimize a driving path for the autonomous vehicle based on the movement trajectory corresponding to each target object;
transmit the optimized driving path to the autonomous vehicle.

23. The central control system of claim 22, wherein the processor being operative to execute the at least one machine executable instruction to optimize the driving path for the autonomous vehicle based on the movement trajectory corresponding to the target object comprises the processor being operative to execute the at least one machine executable instruction to:
compare, for each autonomous vehicle, an estimated driving trajectory corresponding to the autonomous vehicle transmitted from the autonomous vehicle with the movement trajectory corresponding to each target object, and optimize the driving path for the autonomous vehicle when the estimated driving trajectory overlaps the movement trajectory corresponding to at least one target object, such that the optimized driving path does not overlap the movement trajectory corresponding to any target object, wherein the driving path for the autonomous vehicle is not optimized when the estimated driving trajectory does not overlap the movement trajectory corresponding to any target object.
